# DEMANDE DE BREVET EUROPEEN

(11) **EP 0 990 815 A1**
(43) Date de publication de la demande: **05.04.2000**
(21) Numéro de dépôt: 99402319.0
(22) Date de dépôt: 22.09.1999
(51) Int. Cl.: F16F 7/12

(54) **Structure d'amortissement de choc**

(30) Priorité: 28.09.1998 FR 9812103
(71) Demandeur: Alstom Holdings, 75116 Paris (FR)
(72) Inventeur: Villemin, Marc, 70400 Coisevaux (FR); Metzger, Albert, 68500 Hartmannswiller (FR)
(74) Mandataire: Jacobson, Claude

(57) **Abrégé**

L'invention concerne une structure (1) d'amortissement de choc par déformation mécanique, ladite structure étant de forme allongée selon une direction de choc (Oz) et de section transversale courante sensiblement constante. Ladite structure comprend des plaques longitudinales formant un caisson central (2) et deux caissons latéraux (3) disposés de part et d'autre du caisson central. Lesdits caissons latéraux (3) ont chacun un contour transversal extérieur fermé et le caisson central (2) comprend au moins une paire de plaques longitudinales obliques (6) inclinées de manière opposée par rapport à un plan de symétrie de la structure parallèle à la direction de choc.

Application aux véhicules ferroviaires.

## Description

L'invention concerne une structure d'amortissement de choc par déformation mécanique, ladite structure étant de forme allongée selon une direction de choc et de section transversale courante sensiblement constante.

On entend par section courante la section sur l'essentiel de la longueur de la structure d'amortissement de choc.

L'invention s'applique en particulier aux véhicules ferroviaires.

Les cahiers des charges des véhicules transportant des personnes et notamment ferroviaires exigent la présence de telles structures d'amortissement de choc capables, grâce à une déformation mécanique programmée, d'absorber de l'énergie en cas d'accident pour préserver des vies humaines et du matériel.

Les exigences de capacité d'absorption d'énergie pour de telles structures sont de plus en plus élevées alors qu'on cherche simultanément à réduire les masses des véhicules.

De telles structures d'amortissement de choc doivent donc être légères et résister aux efforts statiques. De plus, lors d'un choc, elles doivent se déformer, en s'écrasant en "accordéon", essentiellement selon la direction de choc sans de déporter transversalement ni vriller.

Le document EP-B-621.416 décrit une telle structure d'amortissement de choc qui est constituée de plaques métalliques longitudinales soudées entre elles. La section transversale courante de la structure, constante le long de la direction de choc, comprend un rectangle dont les angles sont reliés par des diagonales qui forment un X à l'intérieur du rectangle.

En cas de choc, la déformation va s'initier aléatoirement à l'une des deux extrémités longitudinales de la structure, ce qui peut entraîner une instabilité de la déformation et donc une absorption d'énergie relativement faible.

Par ailleurs, on constate que, au cours d'un choc, l'effort longitudinal supporté selon la direction de choc par une telle structure atteint tout d'abord une valeur seuil sommet d'un pic, à partir de laquelle l'écrasement débute, puis l'effort longitudinal diminue fortement si bien que l'énergie absorbée par la structure d'amortissement, égale à l'aire de la courbe effort/déformation, est relativement faible.

Il est donc souhaitable de pouvoir limiter la diminution de l'effort longitudinal supporté par la structure d'amortissement de choc au cours de sa déformation.

Toutefois, cet effort longitudinal, correspondant à l'accélération subie par les passagers du véhicule, ne doit pas être top élevé pour la sécurité des passagers.

Enfin, on constate que la déformation d'une telle structure est limitée par l'accumulation de matière qui se forme au niveau du centre du X de la section transversale lors de l'écrasement de la structure. De ce fait, la capacité d'absorption d'énergie d'une telle structure est encore limitée.

Le but de l'invention est de résoudre ces problèmes en fournissant une structure d'amortissement de choc dont la déformation selon la direction de choc est mieux maîtrisée, de stabilité accrue en cours d'écrasement, de capacité de déformation selon la direction de choc et de capacité d'absorption d'énergie accrues, de poids relativement faible, et provoquant des accélérations supportables par les passagers d'un véhicule sur lequel elle est montée.

A cet effet, l'invention a pour objet une structure d'amortissement de choc par déformation mécanique, ladite structure étant de forme allongée selon une direction de choc et de section transversale courante sensiblement constante, caractérisée en ce que la structure comprend des plaques longitudinales formant un caisson central et deux caissons latéraux disposés de part et d'autre du caisson central, en ce que lesdits caissons latéraux ont chacun un contour transversal extérieur fermé, et en ce que le caisson central comprend au moins une paire de plaques longitudinales obliques qui sont inclinées de manière opposée par rapport à un plan de symétrie de la structure parallèle à la direction de choc.

Selon des modes particuliers de réalisation, la structure d'amortissement de choc peut comprendre l'une ou plusieurs des caractéristiques suivantes, prises isolément ou selon toutes les combinaisons techniquement possibles :
- les plaques de ladite paire de plaques longitudinales obliques sont reliées longitudinalement le long d'une arête commune parallèle à la direction de choc, et ces plaques obliques sont reliées longitudinalement au reste de la structure en amont de ladite arête commune ;
- la structure comprend plusieurs paires de plaques longitudinales obliques, les plaques obliques de chaque paire étant inclinées de manière opposée par rapport audit plan de symétrie de la structure, et lesdites plaques obliques délimitent au moins partiellement des dièdres disposés les uns à côté des autres ;
- lesdites plaques longitudinales obliques sont reliées deux à deux le long d'arêtes respectives chacune commune à deux plaques obliques directement voisines, et, pour chaque arête commune, les deux plaques obliques correspondantes sont reliées longitudinalement au reste de la structure en amont de ladite arête commune ;
- au moins certaines plaques obliques directement voisines délimitent partiellement un dièdre et sont reliées longitudinalement en amont de l'arête dudit dièdre par une plaque longitudinale qui s'étend orthogonalement audit plan de symétrie de la structure ;
- le caisson central comprend au moins une plaque longitudinale qui s'étend sensiblement orthogonalement audit plan de symétrie de la structure en reliant des plaques obliques directement voisines ;
- le caisson central est de contour transversal extérieur sensiblement fermé ;
- la structure comprend des organes transversaux de renfort qui sont régulièrement espacés le long de la structure à l'intérieur d'au moins un caisson, notamment latéral, et qui sont solidaires des plaques longitudinales dudit caisson ;
- au moins une plaque longitudinale est munie de moyens d'augmentation de la rigidité longitudinale de la structure le long de celle-ci depuis une première extrémité longitudinale de la structure formant extrémité d'amorçage de sa déformation ; et
- lesdits moyens d'augmentation de la rigidité longitudinale de la structure comprennent des ouvertures espacées qui sont d'aires décroissantes depuis l'extrémité d'amorçage de la déformation de la structure.

L'invention sera mieux comprise à la lecture de la description qui va suivre, donnée uniquement à titre d'exemple, et faite en se référant aux dessins annexés, sur lesquels :
- La figure 1 est une vue schématique en perspective d'une structure d'amortissement de choc selon un premier mode de réalisation de l'invention,
- La figure 2 est une vue éclatée de la structure de la figure 1, et
- Les figures 3 et 4 sont des vues analogues à la figure 1, illustrant chacune un autre mode de réalisation de l'invention.

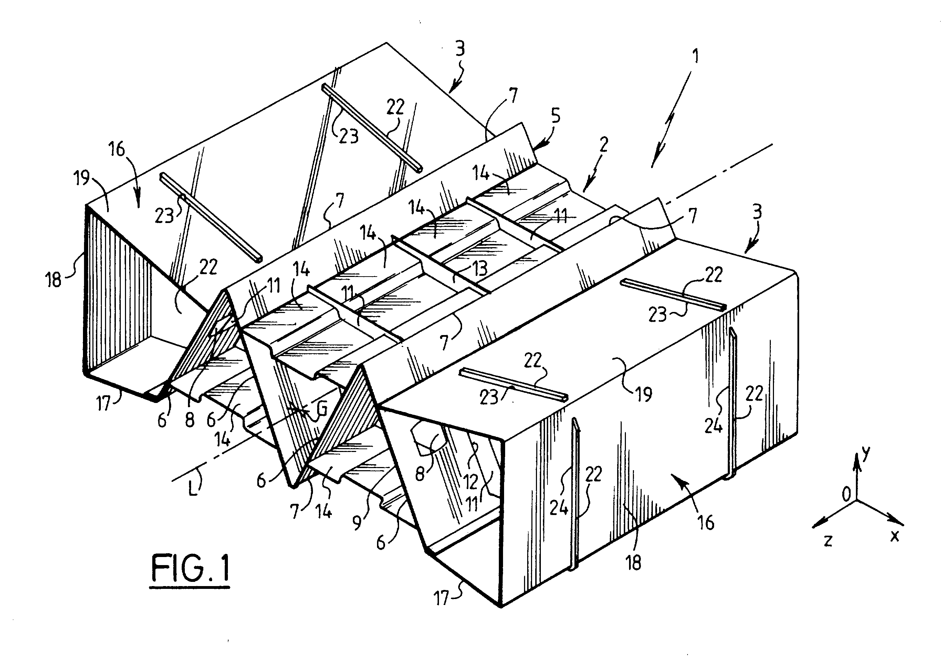

La figure 1 représente une structure d'amortissement de choc 1 constituée d'éléments métalliques rigides soudés entre eux.

Pour faciliter la description, un repère orthogonal direct Oxyz est représenté sur la figure 1.

La structure 1 a une forme générale allongée selon l'axe Oz qui correspond à la direction de choc.

La structure 1 a une section transversale courante sensiblement constante.

La structure 1 comprend essentiellement des plaques longitudinales, soudées entre elles le long de cordons de soudure parallèles à l'axe Oz, et qui forment un caisson central 2 bordé latéralement de part et d'autre par deux caissons latéraux 3. Les caissons 2 et 3 sont orientés selon la direction de choc.

La structure 1 est sensiblement symétrique par rapport à un plan médian passant par la ligne moyenne L de la structure 1 et parallèle au plan Oyz.

La ligne moyenne L est la droite passant par l'ensemble des centres d'inertie G des sections transversales successives de la structure 1. Un seul centre d'inertie G est représenté sur la figure 1.

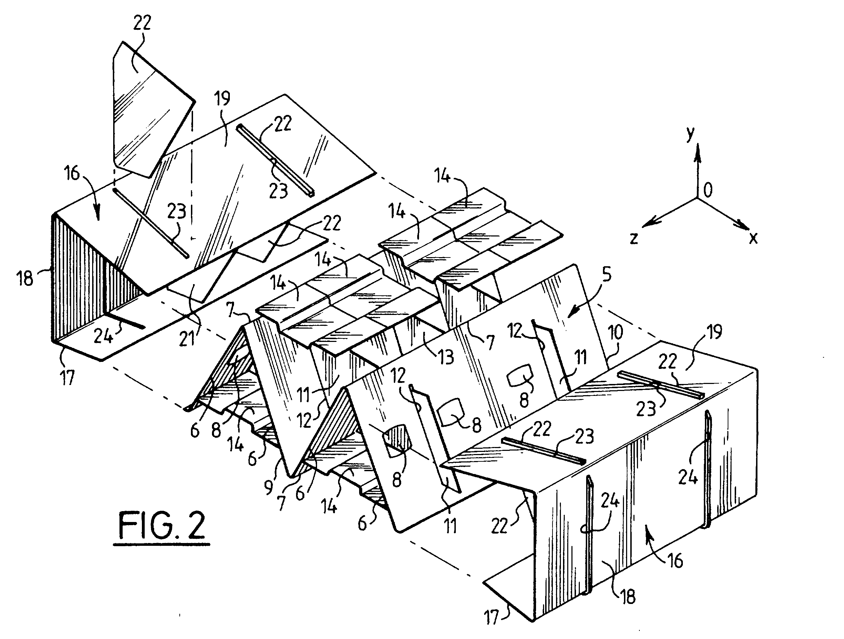

On va maintenant décrire plus précisément, en regard des figures 1 et 2, la constitution de la structure d'amortissement de choc 1.

Le caisson central 2 comprend une tôle ondulée ou en accordéon 5 qui comprend trois plis longitudinaux successifs. Ainsi, cette tôle forme quatre plaques planes obliques 6 adjacentes orientées longitudinalement qui délimitent trois dièdres disposés l'un à côté de l'autre. Ces plaques 6 sont inclinées de manière alternée par rapport au plan Oyz. Les plaques 6 sont donc inclinées successivement de manière opposée par rapport au plan Oyz.

Les plaques obliques 6 directement adjacentes sont reliées le long d'arêtes communes 7 parallèles à la direction de choc.

Les plaques 6 sont donc symétriques par rapport au plan de symétrie de la structure 1 par paires, à savoir une paire de plaques 6 latéralement extérieures et une paire de plaques 6 latéralement intérieures ou centrales.

Des ouvertures 8 sont ménagées dans les plaques 6 latérales extérieures (à droite et à gauche sur les figures 1 et 2). Ces ouvertures 8, de formes générales rectangulaires, sont régulièrement espacées le long de ces plaques 6.

Pour chaque plaque 6 latérale extérieure, trois ouvertures 8 sont ménagées avec des aires décroissantes depuis une première extrémité longitudinale 9 de la structure 1 vers la deuxième extrémité longitudinale 10 de la structure 1.

Deux raidisseurs ou organes de renfort transversaux principaux 11 s'étendent transversalement à la tôle 5, en traversant successivement toutes les plaques 6 par l'intermédiaire de fentes 12, et en faisant saillie latéralement à l'extérieur de la tôle 5.

Les raidisseurs 11 sont des plaques en forme de trapèze isocèle.

Les raidisseurs transversaux principaux 11 sont espacés l'un de l'autre le long de la direction de choc Oz et sont soudés à l'ensemble des plaques obliques 6.

Un raidisseur ou organe de renfort transversal auxiliaire 13, de forme plane triangulaire, s'étend, à l'intérieur du caisson 2, entre les deux plaques obliques 6 centrales auxquelles il est soudé.

Ce raidisseur auxiliaire 13 est disposé entre les raidisseurs principaux 11 sensiblement à égale distance de ceux-ci.

Pour chaque plaque 6 latéralement extérieure, une ouverture 8 est ménagée entre l'extrémité 9 de la structure 1 et la fente 12 adjacente, et deux ouvertures 8 sont ménagées entre les deux fentes 12.

Enfin, le caisson central 2 comprend dix plats longitudinaux 14, de section transversale en Q, qui relient les plaques obliques 6 entre elles en s'étendant orthogonalement au plan de symétrie de la structure 1.

Les plats 14 sont disposés par groupe, les plats 14 d'un même groupe se prolongeant successivement longitudinalement.

Ainsi, un groupe de quatre plats 14 relie les deux plaques obliques 6 latéralement intérieures ou centrales, les raidisseurs transversaux 11 et 13 étant intercalés entre ces plats 14. Ces plats 14 sont soudés aux plaques 6 centrales et aux raidisseurs transversaux 11 et 13.

De même, deux groupes de trois plats 14 relient les plaques obliques 6 situées de part et d'autre du plan de symétrie de la structure 1.

Pour chacun de ces groupes de trois plats 14, les raidisseurs transversaux principaux 11 sont intercalés entre les plats 14.

Il est à noter que tous les plats 14 et les raidisseurs transversaux 11 et 13 sont soudés sur les plaques obliques 6 en amont des arêtes 7 de la tôle ondulée 5.

Le caisson central 2 a un contour extérieur transversal sensiblement fermé.

Du fait de la symétrie de la structure 1, seul le caisson latéral gauche 3 (sur les figures 1 et 2) sera maintenant décrit.

Ce caisson 3 comprend une tôle longitudinale 16 pliée, de section transversale sensiblement en C, avec une branche convergeant vers l'autre.

Ainsi, la tôle 16 comprend une plaque 17 inférieure (sur les figures 1 et 2) sensiblement parallèle au plan Oxz, une plaque latérale 18 verticale parallèle au plan Oyz, et une plaque 19 supérieure inclinée par rapport au plan Oxz.

Cette tôle 16 est soudée sur la plaque oblique 6 latérale extérieure gauche du caisson 2, en amont de l'arête 7 adjacente, de sorte que le caisson latéral gauche 3 a un contour extérieur sensiblement fermé en forme de quadrilatère.

Le caisson latéral 3 gauche comprend en outre des raidisseurs ou organes de renfort transversaux 21, 22, régulièrement espacés le long de l'axe Oz. Un raidisseur central 21 est disposé entièrement à l'intérieur du caisson 3 et soudé sur la tôle 16 et sur la plaque oblique 6 latérale extérieure gauche.

Deux raidisseurs 22, situés de part et d'autre du raidisseur central 21, s'étendent chacun à l'intérieur du caisson latéral 3 gauche et font saillie à l'extérieur de celui-ci par l'intermédiaire de deux fentes 23 et 24.

Les fentes 23 sont ménagées dans la plaque supérieure 19 et les fentes 24 s'étendant dans les plaques latérale 17 et inférieure 18.

Les raidisseurs 22 sont soudés chacun, au niveau d'une zone de recouvrement, sur une partie d'un raidisseur principal 11 en saillie latérale par rapport à la tôle ondulée 5. De plus, ces raidisseurs 22 sont soudés sur les plaques 17, 18 et 19, grâce à leurs parties en saillie, à l'extérieur du caisson latéral 3.

La structure 1 est destinée à être intégrée, par exemple, aux extrémités du châssis d'un véhicule ferroviaire pour absorber un choc se produisant suivant la direction Oz par écrasement de la structure 1 selon cette direction.

On constate qu'en cas d'un tel choc, la déformation par écrasement s'amorce au niveau de l'extrémité 9 de la structure 1 et se propage progressivement vers l'extrémité 10 de la structure 1. Cette déformation programmée de la structure est assurée grâce aux aires décroissantes des ouvertures 8 qui permettent d'augmenter progressivement la rigidité longitudinale de la structure 1 le long de celle-ci depuis son extrémité 9.

Par ailleurs, la présence des raidisseurs transversaux 11, 13, 21 et 22 permet d'étager la déformation de la structure 1 et ainsi d'atteindre une déformation programmée correspondant à celle exigée par un cahier des charges.

De plus, grâce à la symétrie de la structure 1 et à l'inclinaison des plaques obliques 6 par rapport au plan de symétrie de la structure 1, la déformation est assurée essentiellement par flambage plastique dynamique le long de l'axe Oz et la structure 1 reste stable au cours de la déformation sans chasser transversalement ni vriller.

Le fait que les plaques obliques 6 soient reliées, notamment longitudinalement, au reste de la structure 1 en amont des arêtes 7 confère une liberté de déformation accrue par flambage, sans bloquer cette déformation au niveau des arêtes 7 par accumulation de matière.

Enfin, le fait que les contours transversaux extérieurs des caissons latéraux 3 et central 2 soient fermés participe également à la limitation des risques de déport transversal de la structure 1 ou de vrillage au cours de la déformation.

Cette caractéristique confère également, en particulier dans le cas des caissons latéraux 3, une résistance aux efforts statiques satisfaisante et permet des appuis longitudinaux et transversaux de la structure 1 satisfaisants sur des éléments adjacents du châssis du véhicule.

Ainsi, la structure 1, de configuration aérée et donc de poids relativement faible, permet d'atteindre une déformation importante, maîtrisée et programmée, avec une absorption d'énergie relativement importante.

En effet, la structure 1 peut se déformer sur plus de 70 % de sa longueur et supporter des efforts dynamiques stabilisés continus de l'ordre de 6000 kN correspondant à une accélération supportable par les passagers du véhicule.

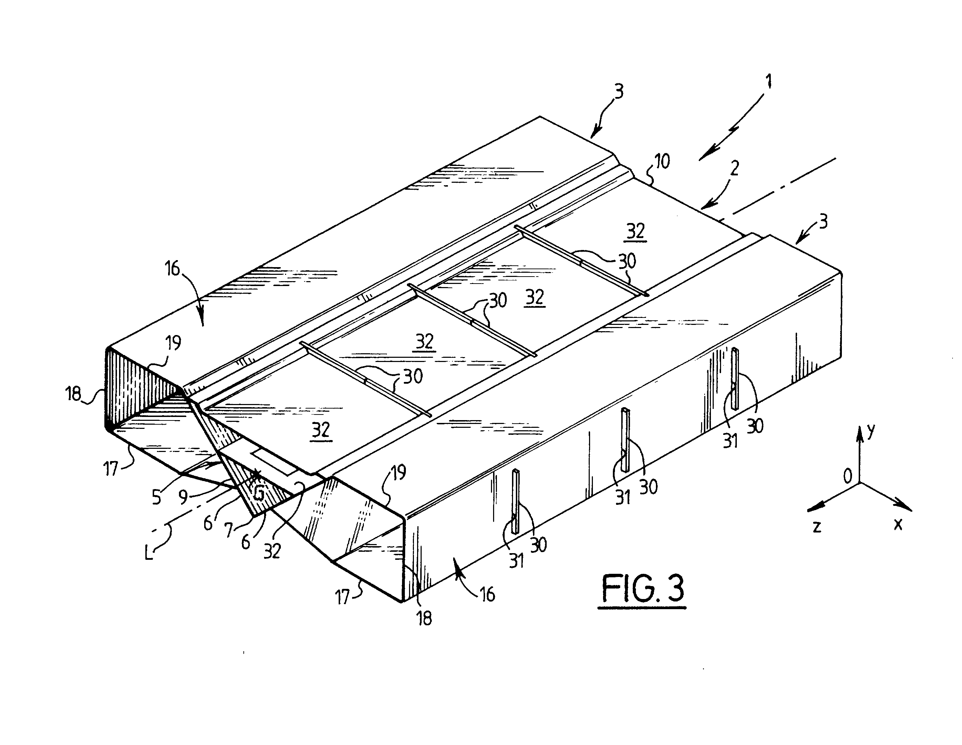

La figure 3 illustre un deuxième mode de réalisation de l'invention selon lequel le caisson central 2 de la structure d'amortissement de choc 1 comprend un seul pli longitudinal et donc une paire unique de plaques obliques 6 symétriques par rapport au plan de symétrie de la structure 1.

Les plaques 6 sont reliées, notamment longitudinalement, au reste de la structure 1, et en particulier aux plaques inférieures 17 des caissons latéraux 3, en amont de leur arête commune 7. Pour ce faire, les plaques inférieures 17 des caissons latéraux 3 remontent (sur la figure 3) vers la ligne moyenne L de la structure 1.

La structure 1 comprend trois paires de raidisseurs transversaux 30. Les raidisseurs 30 d'une même paire se prolongent transversalement et s'étendent ainsi sur toute la largeur (selon l'axe Ox) de la structure 1.

Les raidisseurs 30 d'une même paire se rejoignent au niveau du plan de symétrie de la structure 1, c'est-à-dire le plan passant par la ligne L et parallèle au plan Oyz, et traversent chacun une plaque oblique 6 et la plaque latérale extérieure 18 d'un caisson latéral 3 par l'intermédiaire d'une fente 31.

Deux groupes de quatre plats longitudinaux 32 s'étendent l'un au-dessus de l'autre entre les plaques obliques 6 sur toute la longueur de la structure 1. Les plats 32 de chaque groupe se prolongent successivement longitudinalement, et les raidisseurs transversaux 30 sont intercalés entre les plats 32 qui sont soudés aux raidisseurs transversaux 30 et aux plaques obliques 6.

On notera que le positionnement des plats 32 et la présence des fentes 31 permet de souder les raidisseurs transversaux 30 au reste de la structure 1 en partie depuis l'extérieur de celle-ci.

Certains des plats 32 du groupe situé à l'intérieur de la structure 1 (en bas sur la figure 3), et donc au voisinage de l'arête 7, sont munis d'ouvertures 8 permettant d'augmenter la rigidité longitudinale de la structure 1 depuis l'extrémité 9. Ainsi, une ouverture 8 est ménagée dans chacun des trois premiers plats 32 depuis l'extrémité 9 de la structure 1. Les ouvertures 8 ont des aires décroissantes depuis l'extrémité longitudinale 9 de la structure 1.

Ce deuxième mode de réalisation permet également d'atteindre les buts fixés en début de description.

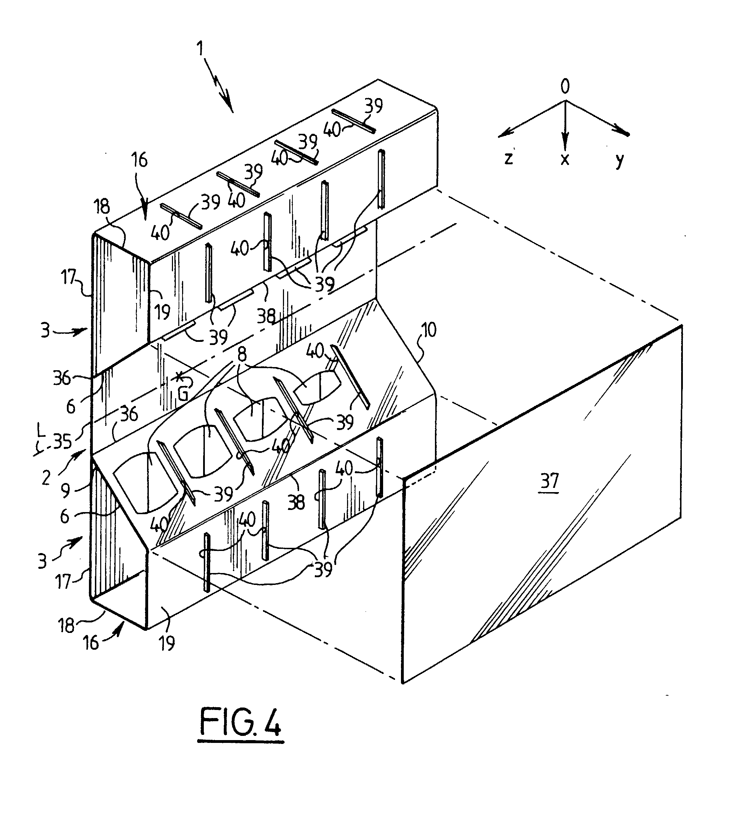

La figure 4 illustre un autre mode de réalisation qui se distingue essentiellement de celui de la figure 3 par le fait que les deux plaques obliques 6 ne sont pas reliées le long d'une arête commune mais sont reliées par l'intermédiaire d'une plaque longitudinale 35 orthogonale au plan de symétrie de la structure 1. Cette plaque 35 est située en amont de l'arête du dièdre délimité par les plaques obliques 6.

Les plaques 6, 17, 18, 19 et 35 appartiennent à une même tôle dont les bords ont été repliés pour former les caissons latéraux 3. Les bords longitudinaux centraux 36 des plaques obliques 6 sont soudés sur la plaque longitudinale 35.

Une autre plaque longitudinale 37, représentée à l'écart du reste de la structure 1 sur la figure 4, est soudée sur les bords longitudinaux latéralement extérieurs 38 des plaques obliques 6.

Dans ce mode de réalisation, quatre ouvertures 8 d'aires décroissantes depuis l'extrémité 9 ont été ménagées dans chaque plaque oblique 6.

Chaque caisson latéral 3 comprend quatre raidisseurs transversaux intérieurs 39 en forme générale de trapèze intercalés entre les ouvertures 8 correspondantes. Ces raidisseurs transversaux sont soudés à l'extérieur des plaques 17, 18, 19 et 6 grâce à la présence de fentes 40 ménagées dans ces plaques et au travers desquelles les raidisseurs 39 font saillie à l'extérieur du caisson latéral 3 considéré.

Comme cela est illustré par la figure 4, la structure d'amortissement de choc 1 selon l'invention peut être placée dans différentes positions. Ainsi, la structure 1 peut être positionnée pour amortir un choc se produisant selon une direction qui n'est pas nécessairement horizontale. La structure 1 selon l'invention peut être intégrée par exemple dans un châssis pour absorber un choc vertical.

De manière plus générale, le nombre de raidisseurs transversaux et d'ouvertures 8 peut varier en fonction d'un cahier des charges donné.

Par ailleurs, les ouvertures 8 peuvent être remplacées par des emboutis ou par des plaques de renfort d'aires croissantes le long de la structure 1 depuis l'extrémité 9 d'amorçage de la déformation.

Enfin, une telle structure d'amortissement de choc peut être montée sur des véhicules autres que ferroviaires.

## Revendications

1. Structure (1) d'amortissement de choc par déformation mécanique, ladite structure (1) étant de forme allongée selon une direction de choc (Oz) et de section transversale courante sensiblement constante, caractérisée en ce que la structure comprend des plaques longitudinales formant un caisson central (2) et deux caissons latéraux (3) disposés de part et d'autre du caisson central (2), en ce que lesdits caissons latéraux (3) ont chacun un contour transversal extérieur fermé, et en ce que le caisson central (2) comprend au moins une paire de plaques longitudinales obliques (6) qui sont inclinées de manière opposée par rapport à un plan de symétrie de la structure parallèle à la direction de choc (Oz).

2. Structure selon la revendication 1, caractérisée en ce que les plaques (6) de ladite paire de plaques longitudinales obliques sont reliées longitudinalement le long d'une arête commune (7) parallèle à la direction de choc (Oz) , et en ce que ces plaques obliques (6) sont reliées longitudinalement au reste de la structure (1) en amont de ladite arête commune (7).

3. Structure selon la revendication 1 ou 2, caractérisée en ce qu'elle comprend plusieurs paires de plaques longitudinales obliques (6), les plaques obliques (6) de chaque paire étant inclinées de manière opposée par rapport audit plan de symétrie de la structure, et en ce que lesdites plaques obliques (6) délimitent au moins partiellement des dièdres disposés les uns à côté des autres.

4. Structure selon la revendication 3, caractérisée en ce que lesdites plaques longitudinales obliques (6) sont reliées deux à deux le long d'arêtes (7) respectives chacune commune à deux plaques obliques (6) directement voisines, et en ce que, pour chaque arête commune (7), les deux plaques obliques correspondantes sont reliées longitudinalement au reste de la structure en amont de ladite arête commune (7).

5. Structure selon l'une quelconque des revendications 1 à 3, caractérisée en ce qu'au moins certaines plaques obliques (6) directement voisines délimitent partiellement un dièdre et sont reliées longitudinalement en amont de l'arête dudit dièdre par une plaque longitudinale (35) qui s'étend orthogonalement audit plan de symétrie de la structure (1).

6. Structure selon l'une quelconque des revendications 1 à 5, caractérisée en ce que le caisson central (2) comprend au moins une plaque longitudinale (14 ; 32 ; 35, 37) qui s'étend sensiblement orthogonalement audit plan de symétrie de la structure (1) en reliant des plaques obliques (6) directement voisines.

7. Structure selon l'une quelconque des revendications 1 à 6, caractérisée en ce que le caisson central (2) est de contour transversal extérieur sensiblement fermé.

8. Structure selon l'une quelconque des revendications 1 à 7, caractérisée en ce que la structure comprend des organes transversaux de renfort (11, 13, 21, 22 ; 30 ; 39) qui sont régulièrement espacés le long de la structure à l'intérieur d'au moins un caisson, notamment latéral, et qui sont solidaires des plaques longitudinales dudit caisson.

9. Structure selon l'une quelconque des revendications 1 à 8, caractérisée en ce qu'au moins une plaque longitudinale (6 ; 32) est munie de moyens (8) d'augmentation de la rigidité longitudinale de la structure le long de celle-ci depuis une première extrémité longitudinale (9) de la structure formant extrémité d'amorçage de sa déformation.

10. Structure selon la revendication 9, caractérisée en ce que lesdits moyens (8) d'augmentation de la rigidité longitudinale de la structure comprennent des ouvertures (8) espacées qui sont d'aires décroissantes depuis l'extrémité d'amorçage (4) de la déformation de la structure.
